# EUROPÄISCHE PATENTSCHRIFT

(11) **EP 1 088 135 B1**
(45) Veröffentlichungstag und Bekanntmachung des Hinweises auf die Patenterteilung: **16.07.2003**
(21) Anmeldenummer: 99924861.0
(22) Anmeldetag: 03.05.1999
(51) Int. Cl.: E02B 3/12, B32B 5/08, D04H 13/00

(54) **VERBUNDSTOFFBAHN ZUM BEWEHREN VON ERDSCHICHTEN**
COMPOSITE FABRIC WEBS FOR REINFORCING SOIL LAYERS
BANDE DE TISSU COMPOSITE POUR ARMER DES COUCHES DE TERRE

(30) Priorität: 11.05.1998 DE 19820951
(43) Veröffentlichungstag der Anmeldung: 04.04.2001
(73) Patentinhaber: Huesker Synthetic GmbH, 48712 Gescher (DE)
(72) Erfinder: ALEXIEW, Dimiter, D-48712 Gescher (DE)
(74) Vertreter: Freischem, Werner, Dipl.-Ing.
(86) Internationale Anmeldenummer: EP9902976
(87) Internationale Veröffentlichungsnummer: WO99058767

(56) Entgegenhaltungen:
- WO-A-95/11350
- US-A- 4 837 387
- US-A- 5 091 247

## Beschreibung

Die Erfindung bezieht sich auf eine Verbundstoffbahn zum Bewehren von Erdschichten, bestehend aus einem textilen Gitter und einem mit dem Gitter verbundenen, wasserdurchlässigen textilen Flächengebilde.

Geotextile Verbundstoffbahnen dieser Art sind bekannt aus der US-Patentschrift 4 472 086. Das Gitter sowie das von einem Vliesstoff gebildete textile Flächengebilde der bekannten Verbundstoffbahn haben eine Dehnbarkeit von weniger als 5%. Ferner ist die Maschenweite des Gitters relativ klein. Diese geotextile Verbundstoffbahn ist bestimmt und geeignet zum Bewehren von Asphaltdecken. Zum Bewehren von Erdschichten sind ferner Gittergewebe aus hochmodulen Polyestergarnen bekannt, deren Maschenweite 20 bis 50 mm beträgt und die insbesondere geeignet sind zur Sicherung von Geländesprüngen, zur Bewehrung der oberen Schicht von Verkehrsflächen, Erddämmen, Lärmschutzwällen und dergleichen.

Der vorliegenden Erfindung liegt die Aufgabe zugrunde, eine geotextile Verbundstoffbahn der eingangs genannten Art derart auszubilden, daß bei ihrem Einbau nicht nur eine gute Bewehrung erreicht wird, sondern auch der unter der textilen Verbundstoffbahn befindliche Untergrund schnell und zuverlässig konsolidiert werden kann.

Diese Aufgabe wird gelöst durch die Merkmale des Patentanspruchs 1.

Nach Ausbreiten der erfindungsgemäßen Verbundstoffbahn auf das Planum des zu konsolidierenden Untergrundes wird eine 30 bis 60 cm hohe Schicht aus Sand, Kies, Schotter und ggf. auch Felsbrocken aufgeschüttet und diese Schicht beispielsweise mittels Walzen und Rüttelwalzen verdichtet. Dabei drückt die aufgeschüttete Schicht das stark dehnbare textile Flächengebilde, insbesondere Vliesstoff, in den nachgiebigen, wasserhaltigen Untergrund, wodurch Porenwasser durch das filternde textile Flächengebilde nach oben gedrückt wird. Beim Verdichten der Aufschüttung baucht sich das dehnfähige textile Flächengebilde zwischen den längs und quer verlaufenden Bändern des Gitters nach unten aus. wodurch eine starke Verzahnung zwischen Aufschüttung und Untergrund erzielt wird. Gleichzeitig vergrößert sich die Kontaktfläche zwischen Untergrund und dem filternden textilen Flächengebilde, so daß auch der Austritt von Wasser aus dem wasserhaltigen Untergrund beschleunigt wird. Nach Aufbringen einer zweiten und ggf. dritten Aufschüttung kann mit erhöhter Kraft weiter verdichtet werden, ohne daß die Gefahr besteht, daß das sich nach unten ausbauchende textile Flächengebilde zerreißt, weil sich über den lichten Feldern des Gitters in der Aufschüttung Brücken oder Gewölbe ausbilden, die sich auf den Bändern des Gitters abstützen. Ist die Aufschüttung dicker als die lichte Weite der Felder des Gitters, dann wirken die Verdichtungskräfte im wesentlichen nur noch auf die Bänder des Gitters ein, so daß eine weiter steigende Belastung des dehnfähigen textilen Flächengebildes nicht mehr zu erwarten ist. Das dehnfähige, wasserdurchlässige und filternde textile Flächengebilde kann ein Gewirke oder auch ein Gewebe sein, vorzugsweise aber ein Vliesstoff, der zur Verfestigung vernadelt ist. Dieser Vliesstoff kann 2 bis 6 mm dick sein und hat während des Einbaus der Verbundstoffbahn und während der Verdichtung der Aufschüttung eine schützende Funktion für die lasttragenden Bänder des Gitters.

Mit Hilfe der erfindungsgemäßen Verbundstoffbahn läßt sich die Konsolidierung des Untergrundes von Verkehrswegen und Verkehrsflächen erheblich verbessern und beschleunigen. Gleichzeitig wird eine zuverlässige Verzahnung zwischen Untergrund und Aufschüttung erreicht, obgleich zwischen Untergrund und Aufschüttung sich eine Filterschicht befindet, die verhindert, daß tonige Bestandteile des Untergrundes in die körnige und wasserableitende Aufschüttung gelangen. Schließlich wird eine starke Bewehrung der Schicht erzielt, in der sich der Untergrund mit der Aufschüttung verbindet.

In der folgenden Beschreibung werden Ausführungsbeispiele der erfindungsgemäßen Verbundstoffbahn unter Bezugnahme auf die Zeichnungen näher erläutert. Die Zeichnungen zeigen in:
Fig. 1 eine Frontansicht und
Fig. 2 eine Draufsicht auf eine Verbundstoffbahn nach der Erfindung,
Fig. 3 eine perspektivische Ansicht der Verbundstoffbahn gemäß Fig. 2 im eingebauten Zustand,
Fig. 4 bis 6 drei Zustände der Verbundstoffbahn nach der Erfindung beim Bau eines Dammes für Verkehrswege,
Fig. 7 Draufsicht auf eine weitere Ausführungsform der Verbundstoffbahn.

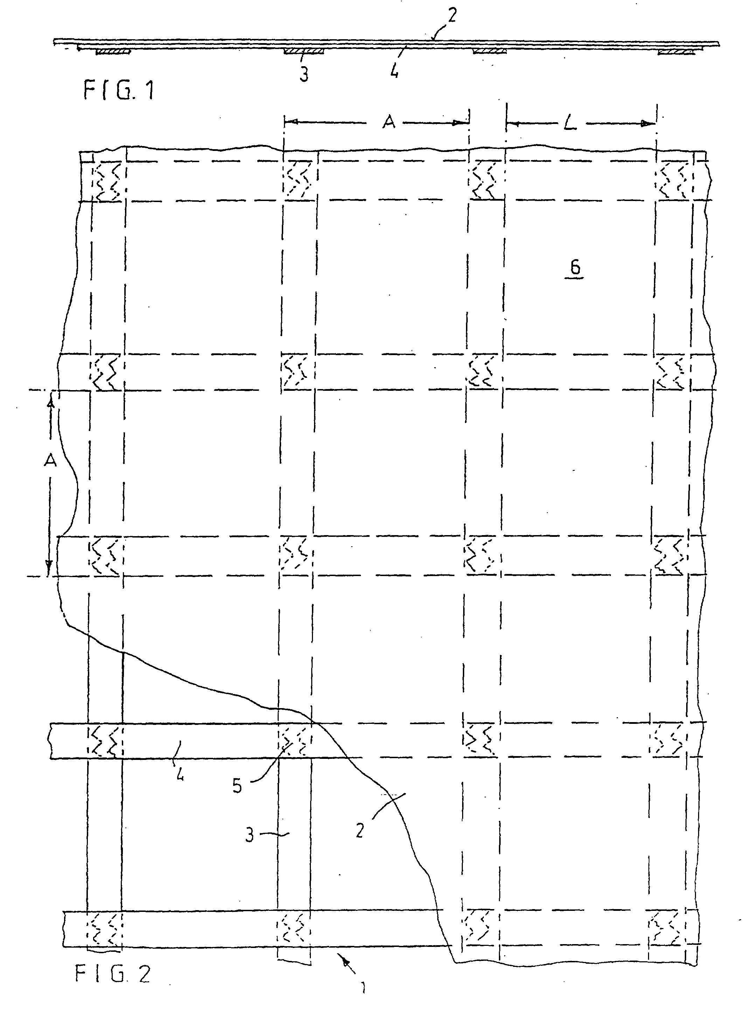

Die Fig. 1 bis 3 zeigen eine Verbundstoffbahn zum Bewehren und Konsolidieren von Böden und Erdschichten, die sich zusammensetzt aus einem tragenden Gitter 1 und einem das Gitter 1 überdeckenden textilen Flächengebilde 2, das aus einem stark dehnfähigen Material, insbesondere einem Vliesstoff besteht, das im gedehnten Zustand relativ große Kräfte aufzunehmen vermag. Das Gitter 1 besteht aus dehnsteifen, zugfesten, mindestens 4 cm, vorzugsweise 6 bis 10 cm breiten und in Abständen von mindestens 30 cm, vorzugsweise 40 bis 65 cm in Längsrichtung der Verbundstoffbahn verlaufenden Bändern 3 und quer zu diesen Bändern 3 verlaufenden Bändern 4, die ebenfalls dehnsteif und hoch zugfest sind und mindestens 4 cm, vorzugsweise 6 bis 10 cm breit sind und Abstände von mindestens 30 cm, vorzugsweise 40 bis 65 cm voneinander haben.

Die sich kreuzenden Bänder 3 und 4 sind an den Kreuzungsstellen 5 schiebefest miteinander verbunden. Die Verbindung der Bänder 3 und 4 an den Kreuzungsstellen 5 kann durch Nähen, Weben, Vernadeln, Klammern, Kleben oder Schweißen erfolgen.

Das über dem Gitter 1 befindliche textile Flächengebilde 2 ist punktuell oder aber auch vollflächig mit dem Gitter 1 verbunden. Diese Verbindung kann auch durch Nähen, Vernadeln, Klammern, Kleben oder Schweißen erfolgen.

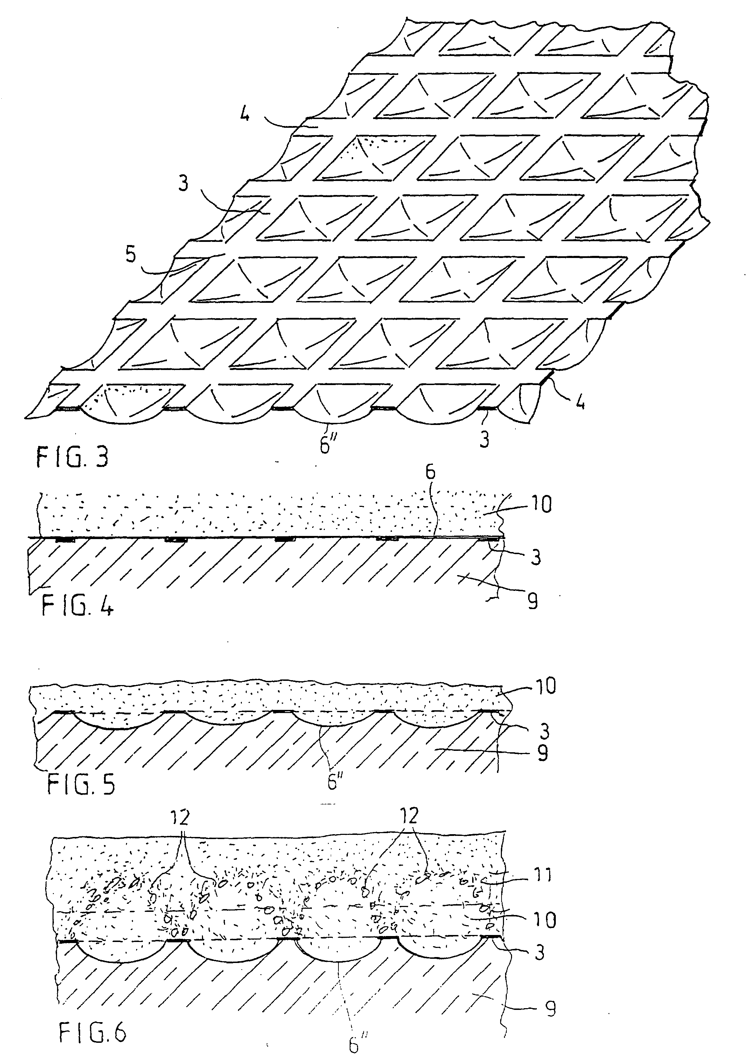

Zwischen den längs verlaufenden und quer verlaufenden Bändern 3,4 befinden sich vorzugsweise quadratische Felder 6, deren lichte Weite 30 bis 60 cm beträgt. Das in diesen Feldern 6 befindliche dehnfähige textile Flächengebilde 2 baucht sich - wie Fig. 3 zeigt - nach unten aus, wenn auf den Verbundstoff eine Schicht aus Sand, Kies. Steinen und Gemischen davon aufgebracht wird und diese 30 bis 60 cm dicke Schicht zusammen mit dem darunter befindlichen Untergrund verdichtet wird. Durch dieses Ausbäuchen des textilen dehnfähigen Flächengebildes 2 zwischen den Bändern 3 und 4 des Gitters 1 wird eine sehr gute Verzahnung der Aufschüttung mit dem Untergrund erreicht. Dadurch wird verhindert, daß die Aufschüttung über dem geotextilen Verbundstoff abgleiten kann.

Das um 30 bis 100% dehnbare textile Flächengebilde 2 kann ein Vliesstoff, ein Gewirke oder auch ein Gewebe sein. Dieses über die Bänder 3,4 des Gitters 1 angeordnete textile Flächengebilde 2 hat beim Verdichten der Aufschüttung eine Schutzfunktion für die tragenden Bänder 3,4 des Gitters 1. Insbesondere ist als textiles Flächengebilde 2 ein 3 bis 5 mm dicker und als Filterschicht wirkender Vliesstoff aus vernadelten Polypropylenfasern oder Polyethylenfasern geeignet.

Die Bänder 3 und 4 des Gitters 1 können aus hochfestem PolyesterFilamentgarn, aus Polyamid 6,6 hochfest oder entsprechenden Garnen aus Synthesefasern bestehen. Die Bänder 3,4 können gewebt sein, wobei nur die lasttragenden Kettfäden aus hochfestem Material bestehen, während die Schußfäden nur eine die Kettfäden zusammenhaltende Funktion haben.

Die Fig. 4 zeigt eine auf dem Untergrund 9 abgerollte Verbundstoffbahn, auf die eine lockere Schicht 10 aus nichtbindigem Boden, insbesondere Sand, Kies, Schotter und dergleichen aufgebracht ist. Die Dicke dieser Schicht 10 entspricht etwa der lichten Weite L der Felder 6. Der Untergrund 9 ist weich, überfeucht, wenig tragfähig, kompressibel, plastisch und vorwiegend bindig und hat eine geringe Wasserdurchlässigkeit.

Die Fig. 5 zeigt die Situation, nachdem die erste aufgeschüttete Schicht 10 zuerst statisch und dann dynamisch verdichtet wurde. Die Verdichtung erfolgt z.B. durch Walzen und durch Rüttelwalzen. Durch die lokale Eindrückung in den nachgiebigen Feldern 6 wird der noch nicht verfestigte Untergrund 9 stark komprimiert und zur Verfestigung gezwungen. Die auf die aufgeschüttete erste Schicht 10 ausgeübten statischen und dynamischen Verdichtungskräfte schlagen in den Bereichen der lichten Felder 6 voll auf den Untergrund 9 durch. Dabei wird eine beschleunigte Konsolidierung erreicht, weil die Verdichtungskräfte voll auf den Untergrund einwirken und das im Untergrund befindliche Wasser nach oben treibt und die nach unten ausgebauchte Faservliesschicht 2 eine größere Entwässerungsfläche verursacht, wodurch das Austreten des Wassers aus dem tonhaltigen Untergrund erleichtert wird.

Die Fig. 6 zeigt die Situation, nachdem eine zweite Schicht 11 auf die erste verdichtete Schicht 10 aufgeschüttet und dann statisch und dynamisch verdichtet wurde. Die Dicke der über dem Verbundstoff befindlichen Schicht 10 und 11 ist 1 bis 1,5 mal so groß wie die lichte Weite L der Felder 6.

Die Ausbauchung 6' der Felder 6 hat sich durch die weitere Verdichtung verstärkt. Das im Untergrund 9 befindliche Wasser ist nach oben durch das textile Flächengebilde 2 bzw. durch den Vliesstoff hindurch in die körnige und wasserableitende Schicht 10 gedrückt und der tragende Untergrund 9 ist ebenso wie die aufgeschütteten Schichten 10 und 11 voll verdichtet.

Das dehnfähige textile Flächengebilde 2 bzw. der Vliesstoff wirkt dabei als Trennwand zwischen dem Untergrund 9 und der Aufschüttung 10,11 und als Filterschicht, die verhindert, daß tonige Bestandteile in die aufgeschütteten Schichten 10,11 gelangen.

Bei der Verdichtung des aus Kies, Schotter und dergleichen bestehenden Schichten 10 und 11 bilden sich über den Feldern 6 sogenannte Brücken 12, deren Enden sich auf die Bänder 3 und 4 abstützen, so daß bei der Verdichtung der zweiten aufgeschütteten Schicht 12 die Verdichtungskräfte insbesondere auf die Bänder 3 und 4 des Gitters 1 einwirken.

Im Zuge der Verdichtung wird sich ein Gleichgewicht einstellen zwischen der Ausbauchung der Felder 6", der Gegenpressung des verdichteten Untergrundes 9 und der im Korngerüst der aufgeschütteten Schichten 10 und 11 sich bildenden Brücken oder Gewölbe 12 , die sich bei weiterem Verdichten im wesentlichen auf die Bänder 3,4 abstützen. Wenn die Aufschüttung höher ist als die lichte Weite L der Felder 6, dann werden sich die Brücken 12 bzw. die Gewölbe bei ausreichender Größe der Körnung des aufgeschütteten Materials in vollem Maße bilden, so daß dann die weitere Verdichtung mit fast beliebig großen Kräften weitergeführt werden kann, ohne befürchten zu müssen, daß das textile Flächengebilde 2 zerreißt.

Je kleiner die lichte Weite L der Felder 6 ist und je größer die in der Aufschüttung befindlichen Steine sind, um so schneller bilden sich beim Verdichten die Brücken 12, welche das gedehnte Flächengebilde 2 bzw. den Vliesstoff vor weiter steigender Belastung schützen.

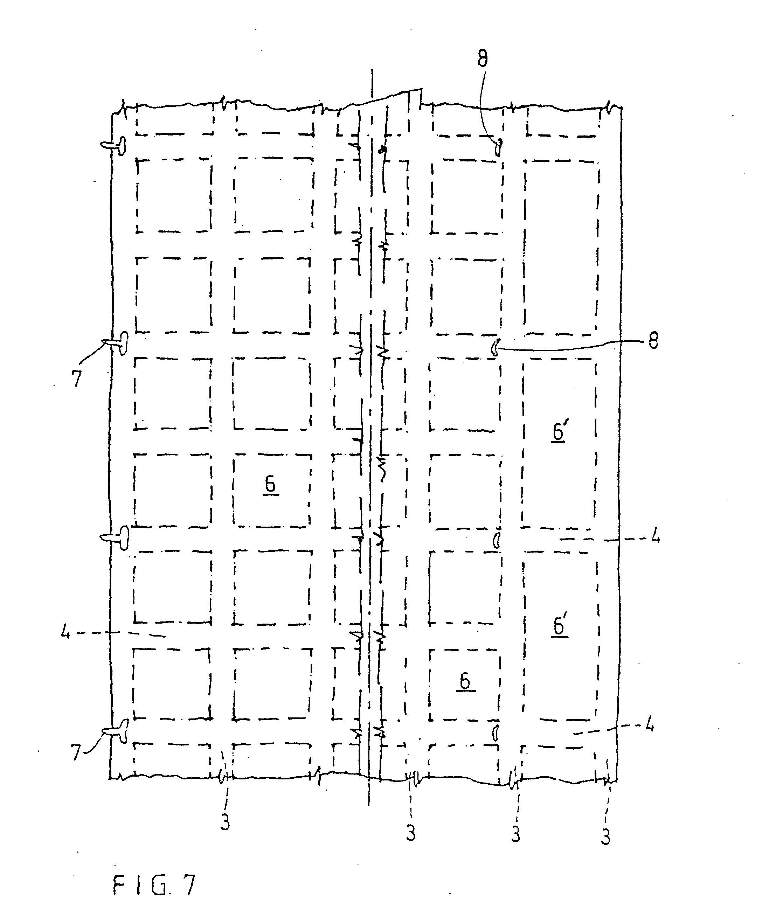

In Fig. 7 ist eine Verbundstoffbahn nach der Erfindung dargestellt, bei der die Felder 6' am rechten Rand rechteckig sind und eine Länge haben, die doppelt so groß ist wie die übrigen Felder 6. Beim Verlegen von zwei Verbundstoffbahnen nebeneinander wird die zweite Bahn so mit der ersten Bahn überlappend verlegt, daß die Felder 6 am linken Rand der zweiten Bahn über die Felder 6' am rechten Rand der ersten Bahn liegen. Beim Verdichten der ersten Aufschüttung 10 werden die Felder 6 der zweiten Bahn in die Felder 6' der ersten Bahn gedrückt, so daß sich die zweite Bahn mit der ersten Bahn verzahnt und damit eine zuverlässige Verbindung der nebeneinanderliegenden Bahnen hergestellt ist.

Die länglichen Felder 6' können an nur einem Rand der Verbundstoffbahn oder aber auch an beiden Rändern der Verbundstoffbahn angeordnet sein. Sind an beiden Rändern der Verbundstoffbahn Felder 6' angeordnet, die doppelt so lang sind wie die quadratischen Felder 6, dann ist es zweckmäßig, die zweite und jede folgende Bahn, die neben einer verlegten Bahn verlegt wird, um den Abstand A der quer verlaufenden Bänder 4 zu versetzen.

Mit Hilfe von Kupplungselementen, z.B. Haken 7 und Ösen 8, die an den Randbereichen der Verbundstoffbahn angeordnet sind, läßt sich die optimale Überlappung nebeneinanderliegender Verbundstoffbahnen schnell erreichen.

Die Verbundstoffbahn nach der Erfindung ist vorzugsweise 8 bis 12 m breit und in ihrer Längsmitte umgefaltet und zu einer 4 bis 6 m breiten Rolle aufgerollt. Damit die Verbundstoffbahn zu einer kompakten Rolle aufgewikkelt und durch Abrollen leicht verlegt wrden kann, erfolgt das Falten der Verbundstoffbahn in der Weise, daß die Vliesstoffschicht innen liegt und die in Längsrichtung verlaufenden Bänder 3 der einen Bahnhälfte zwischen die längs verlaufenden Bänder 3 der anderen Bahnhälfte zu liegen kommen.Beim Verlegen der Verbundstoffbahn kann diese ohne weiteres von der Rolle abgewickelt und danach auf ihre volle Breite aufgefaltet werden, wobei dann auch die zunächst oben liegende Bahnhälfte mit ihrem zunächst oben liegenden Gitter auf das Planum des Untergrundes aufgelegt wird.

### Bezugszeichenliste:

- 1: Gitter
- 2: textiles Flächengebilde
- 3: Band in Längsrichtung
- 4: Band in Querrichtung
- 5: Kreuzungsstellen
- 6: lichte Felder
- 6': Rechteck-Felder
- 6": durchhängende Felder
- 7: Haken
- 8: Ösen, Schlaufen
- 9: Untergrund
- 10: erste aufgeschüttete Schicht
- 11: zweite aufgeschüttete Schicht
- 12: Brücke bzw. Gewölbe

- A: Abstand
- L: lichte Weite

## Patentansprüche

1. Verbundstoffbahn zum Bewehren von Erdschichten, bestehend aus einem textilen Gitter (1) und einem mit dem Gitter (1) verbundenen, wasserdurchlässigen textilen Flächengebilde (2), **dadurch gekennzeichnet, daß** das Gitter (1) aus mindestens 4 cm breiten, in Abständen (A) von mindestens 30 cm in Längsrichtung der Verbundstoffbahn verlaufenden, hoch zugfesten Bändern (3) und aus mindestens 4 cm breiten, in Abständen (A) von mindestens 30 cm quer zu den ersten Bändern (1) verlaufenden, hoch zugfesten zweiten Bändern (4) besteht, die an den Kreuzungsstellen (5) schiebefest mit den ersten Bändern (3) verbunden sind und das textile Flächengebilde (2) aus einem um mindestens 25%, vorzugsweise 35% bis 80%, dehnfähigen und zerreißfesten Material, z.B. Vliesstoff, Gewirke oder dergleichen, besteht und über dem Gitter (1) angeordnet ist.

2. Verbundstoffbahn nach Anspruch 1, **dadurch gekennzeichnet, daß** die lichte Weite (L) zwischen den Bändern (3,4) 30 cm bis 60 cm beträgt.

3. Verbundstoffbahn nach Anspruch oder 2, **dadurch gekennzeichnet, daß** die Breite der Bänder (3,4) 6 bis 12 cm beträgt.

4. Verbundstoffbahn nach einem der Ansprüche 1 bis 3, **dadurch gekennzeichnet, daß** die aus hochmodulen Fäden oder Garnen bestehenden Bänder (3,4) eine Zugfestigkeit von mehr als 15 kN, vorzugsweise mehr als 30 kN haben.

5. Verbundstoffbahn nach einem der Ansprüche 1 bis 4, **dadurch gekennzeichnet, daß** das textile Gitter (1) eine Zugfestigkeit in Längs- und Querrichtung von 50 bis 150 kN/m hat.

6. Verbundstoffbahn nach einem der Ansprüche 1 bis 5, **dadurch gekennzeichnet, daß** die Bänder (3,4) des Gitters (1) aus hochmodulen Kettfäden und verbindenden Schußfäden gewebt sind.

7. Verbundstoffbahn nach einem der Ansprüche 1 bis 5, **dadurch gekennzeichnet, daß** die Bänder (3,4) Fadengelege sind mit hochmodulen, in Längsrichtung verlaufenden Kettfäden, die miteinander vernäht sind.

8. Verbundstoffbahn nach einem der Ansprüche 1 bis 7, **dadurch gekennzeichnet, daß** die von dem Gitter (1) gebildeten lichten Felder (6,6') rechteckig, vorzugsweise quadratisch sind.

9. Verbundstoffbahn nach Anspruch 8, **dadurch gekennzeichnet, daß** an mindestens einem Seitenrand der Verbundstoffbahn längliche Felder (6') angeordnet sind, deren Länge mindestens doppelt so groß ist wie die Länge der übrigen Felder (6).

10. Verbundstoffbahn nach einem der Ansprüche 1 bis 9, **dadurch gekennzeichnet, daß** das dehnfähige textile Flächengebilde ein vernadelter Vliesstoff aus Synthesefasern ist mit einer Dicke von 1,5 bis 6 mm und einer Zerreißfestigkeit von mindestens 1,5 kN Stempeldurchdrückkraft nach DIN 54307 und DIN EN 776.

11. Verbundstoffbahn nach einem der Ansprüche 1 bis 9, **dadurch gekennzeichnet, daß** im Randbereich der Verbundstoffbahn an den quer verlaufenden zweiten Bändern (4) Kupplungsvorrichtungen (7,8), z.B. Haken (7), angeordnet sind, die mit komplementären Kupplungsvorrichtungen (7,8), z.B. Ösen (8) einer angrenzenden Verbundstoffbahn zusammenwirken.

12. Verbundstoffbahn nach einem der Ansprüche 1 bis 11, **dadurch gekennzeichnet, daß** sie ca. 8 bis 12 m breit und im Bereich ihrer Längsmitte zu einer ca. 4 bis 6 m breiten Doppelbahn gefaltet und zu einer Rolle aufgewikkelt ist.

13. Verbundstoffbahn nach Anspruch 12, **dadurch gekennzeichnet, daß** die Verbundstoffbahn so gefaltet ist, daß das dehnfähige textile Flächengebilde innen liegt und die längs verlaufenden Bänder (3) einer Hälfte zwischen den Bändern (3) der anderen Hälfte liegen.

14. Verfahren zum Konsolidieren einer Erdschicht, insbesondere eines Verkehrswegedamms, **dadurch gekennzeichnet, daß** auf das Planum einer zu konsolidierenden Erdschicht eine Verbundstoffbahn gemäß einem der Ansprüche 1 bis 13 ausgelegt und mit einer Aufschüttung aus einem Gemisch aus Sand, Kies, Steinen, Brechschotter und gegebenenfalls Felsbrokken und einer Höhe von 30 bis 60 cm, jedoch nicht höher als die lichte Weite (L) der Gitterfelder (6) belastet und anschließend diese Aufschüttung zunächst statisch und dann dynamisch mit einer Kontaktpressung 50 bis 150 kN/m² verdichtet und nach Aufbringen einer weiteren Aufschüttung von mindestens 30 cm diese gegebenenfalls mit erhöhter Kraft weiter verdichtet wird.

15. Verfahren nach Anspruch 14, **dadurch gekennzeichnet, daß** neben einer verlegten Verbundstoffbahn eine zweite Verbundstoffbahn verlegt wird, welche die erste Verbundstoffbahn so weit überlappt, daß die Felder 6,6' am linken oder rechten Rande der zweiten Verbundstoffbahn über den Feldern 6,6' am rechten oder linken Rande der ersten Verbundstoffbahn liegen.

## Claims

1. A composite fabric web for reinforcing soil layers, comprising a textile lattice (1) and a water-permeable textile fabric (2) connected with the lattice (1), **characterised in that** the lattice (1) consists of high tensile strength tapes (3) at least 4 cm wide and extending at distances (A) of at least 30 cm in the longitudinal direction of the composite fabric web and of high tensile strength second tapes (4) at least 4 cm wide and extending at distances (A) of at least 30 cm transversely to the first tapes (1), which tapes (4) are connected to the first tapes (3) in non-slip manner at the intersection points (5) and the textile fabric (2) consists of an at least 25%, preferably 35% to 80% extensible, tear-resistant material, e.g. nonwoven fabric, knitted fabric or the like, and is arranged over the lattice (1).

2. A composite fabric web according to claim 1, **characterised in that** the internal width (L) between the tapes (3, 4) amounts to 30 cm to 60 cm.

3. A composite fabric web according to claim 1 or 2, **characterised in that** the width of the tapes (3, 4) amounts to 6 to 12 cm.

4. A composite fabric web according to one of claims 1 to 3, **characterised in that** the tapes (3, 4) consisting of high modulus threads or yarns have a tensile strength of more than 15 kN, preferably more than 30 kN.

5. A composite fabric web according to one of claims 1 to 4, **characterised in that** the textile lattice (1) has a tensile strength in the longitudinal and transverse directions of 50 to 150 kN/m.

6. A composite fabric web according to one of claims 1 to 5, **characterised in that** the tapes (3, 4) of the lattice (1) are woven from high modulus warp threads and linking weft threads.

7. A composite fabric web according to one of claims 1 to 5, **characterised in that** the tapes (3, 4) are laid fabrics with high modulus warp threads extending in the longitudinal direction, which are sewn together.

8. A composite fabric web according to one of claims 1 to 7, **characterised in that** the internal spaces (6, 6') formed by the lattice (1) are rectangular, preferably square.

9. A composite fabric web according to claim 8, **characterised in that** elongate spaces (6') are arranged at at least one side edge of the composite fabric web, the length of which spaces is at least twice as great as the length of the other spaces (6).

10. A composite fabric web according to one of claims 1 to 9, **characterised in that** the extensible textile fabric is a needle-punched nonwoven of synthetic fibres and has a thickness of 1.5 to 6mm and a tear-resistance of at least 1.5 kN plunger puncture force to DIN 54307 and DIN EN 776.

11. A composite fabric web according to one of claims 1 to 9, **characterised in that** coupling devices (7, 8), e.g. hooks (7), are arranged in the edge area of the composite fabric web on the transversely extending second tapes (4), which coupling devices (7, 8) cooperate with complementary coupling devices (7, 8), e.g. eyelets (8), of an adjoining composite fabric web.

12. A composite fabric web according to one of claims 1 to 11, **characterised in that** it is approximately 8 to 12 m wide and is folded in the longitudinally central area to form an approximately 4 to 6 m wide double web and wound into a roll.

13. A composite fabric web according to claim 12, **characterised in that** the composite fabric web is folded in such a way that the extensible textile fabric lies on the inside and the longitudinally extending tapes (3) of one half lie between the tapes (3) of the other half.

14. A method of consolidating a soil layer, in particular of a traffic route embankment, **characterised in that** a composite fabric web according to one of claims 1 to 13 is laid onto a prepared soil layer to be consolidated and is weighted down with a filling of a mixture of sand, gravel, stones, crushed stone and optionally lumps of rock and of a depth of 30 to 60 cm, but no deeper than the internal width (L) of the lattice spaces (6), and then this filling is compacted first statically and then dynamically with a contact pressure of 50 to 150 kN/m² and, after the application of an additional filling of at least 30 cm, the latter is further compacted optionally with increased force.

15. A method according to claim 14, **characterised in that** next to a laid composite fabric web there is laid a second composite fabric web which overlaps the first composite fabric web by such an amount that the spaces (6, 6') at the left- or right-hand edge of the second composite fabric web lie over the spaces (6, 6') at the right- or left-hand edge of the first composite fabric web.

## Revendications

1. Feuille de matériau composite pour la protection de couches du sol, composée d'un treillis textile (1) et d'une structure plane (2) en textile imperméable à l'eau liée au treillis (1), **caractérisée en ce que** le treillis (1) se compose de bandes (3) très résistantes à la traction, d'une largeur minimale de 4 cm, qui s'étendent dans le sens de la longueur de la feuille de matériau composite à des intervalles (A) d'au moins 30 cm, et de deuxièmes bandes (4) très résistantes à la traction, d'une largeur minimale de 4 cm, qui s'étendent dans le sens travers de la feuille de matériau composite à des intervalles (A) d'au moins 30 cm et qui sont reliées aux premières bandes (3) de manière à éviter un glissement au niveau des points de croisement (5), et **en ce que** la structure textile plane (2) se compose d'un matériau étirable à au moins 25%, de préférence de 35% à 80%, et résistant à la déchirure, par exemple une nappe de fibres, un maillage ou similaires, et est disposée par-dessus le treillis (1).

2. Feuille de matériau composite selon la revendication 1, **caractérisée en ce que** la largeur intérieure (L) entre les bandes (3, 4) mesure de 30 cm à 60 cm.

3. Feuille de matériau composite selon la revendication 1 ou la revendication 2, **caractérisée en ce que** la largeur des bandes (3, 4) mesure de 6 à 12 cm.

4. Feuille de matériau composite selon l'une des revendications 1 à 3, **caractérisée en ce que** les bandes (3, 4) composées de fils ou filées à haut module ont une résistance à la traction supérieure à 15 kN, de préférence supérieure à 30 kN.

5. Feuille de matériau composite selon l'une des revendications 1 à 4, **caractérisée en ce que** le treillis textile (1) possède une résistance à la traction de 50 à 150 kN/m dans le sens de la longueur et dans le sens de la largeur.

6. Feuille de matériau composite selon l'une des revendications 1 à 5, **caractérisée en ce que** les bandes (3, 4) du treillis (1) sont tissées à partir de fils de chaîne à haut module et de fils de trame de liaison.

7. Feuille de matériau composite selon l'une des revendications 1 à 5, **caractérisée en ce que** les bandes (3, 4) sont des assemblages de fils avec des fils de chaîne à haut module s'étendant dans le sens longitudinal qui sont cousus les uns aux autres.

8. Feuille de matériau composite selon l'une des revendications 1 à 7, **caractérisée en ce que** les espaces libres (6, 6') formés par le treillis (1) sont des rectangles, de préférence des carrés.

9. Feuille de matériau composite selon la revendication 9, **caractérisée en ce que** des espaces allongés (6') dont la longueur est au moins égale à deux fois la longueur des autres espaces (6) sont disposés sur au moins un bord latéral de la feuille de matériau composite.

10. Feuille de matériau composite selon l'une des revendications 1 à 9, **caractérisée en ce que** la structure textile plane extensible est une nappe de fibres aiguilletée faite de fibres synthétiques d'une épaisseur de 1,5 à 6 mm et ayant une résistance à la déchirure par poinçonnement d'au moins 1,5 kN mesurée suivant les normes DIN 54307 et DIN EN 776.

11. Feuille de matériau composite selon l'une des revendications 1 à 9, **caractérisée en ce que** des dispositifs d'accouplement (7, 8), par exemple des crochets (7), qui coopèrent avec des dispositifs d'accouplement (7, 8) complémentaires, par exemple des oeillets (8), d'une feuille de matériau composite adjacente, sont disposés dans la zone périphérique de la feuille de matériau composite sur les deuxièmes bandes (4) s'étendant dans le sens de la largeur.

12. Feuille de matériau composite selon l'une des revendications 1 à 11, **caractérisée en ce qu'**elle a une largeur d'environ 8 à 12 m et qu'elle est pliée dans la zone de sa ligne médiane longitudinale en une feuille double d'environ 4 à 6 m de largeur et bobinée en rouleau.

13. Feuille de matériau composite selon la revendication 12, **caractérisée en ce que** la feuille de matériau composite est pliée de façon que la structure textile plane extensible se trouve à l'intérieur et que les bandes (3) s'étendant dans le sens de la longueur d'une moitié de feuille se trouvent entre les bandes (3) de l'autre moitié.

14. Procédé de consolidation d'une couche du sol, en particulier d'une chaussée de circulation, **caractérisé en ce qu'**une feuille de matériau composite selon l'une des revendications 1 à 13 est posée sur la plate-forme d'une couche de sol à consolider et chargée par déversement d'un mélange de sable, de gravillon, de pierres, de concassés et le cas échéant de morceaux de roches sur une hauteur de 30 à 60 cm mais non supérieure à la largeur libre (L) des espaces (6) du treillis et ensuite les matériaux déversés sont compactés d'abord de manière statique puis dynamique sous une force de compression de 50 à 150 kN/m² et le cas échéant à nouveau compactés sous une force de compression supérieure après déversement d'autres matériaux sur une hauteur d'au moins 30 cm.

15. Procédé selon la revendication 14, **caractérisé en ce que**, en plus d'une feuille de matériau composite posée, on pose une deuxième feuille de matériau composite qui chevauche la première feuille de matériau composite de façon que les espaces (6, 6') sur le bord gauche ou droit de la deuxième feuille de matériau composite se trouvent par-dessus les espaces (6, 6') sur le bord droit ou gauche de la première feuille de matériau composite.
